# EUROPEAN PATENT APPLICATION

(11) **EP 4 817 713 A1**
(43) Date of publication of application: **07.10.2026**
(21) Application number: 26166160.7
(22) Date of filing: 19.03.2026
(51) Int. Cl.: A63F 13/42, A63F 13/56, A63F 13/213

(54) **INFORMATION PROCESSING METHOD, INFORMATION PROCESSING SYSTEM, AND INFORMATION PROCESSING PROGRAM**

(30) Priority: 26.03.2025 JP 2025051254
(71) Applicant: Nintendo Co., Ltd., Kyoto-shi, Kyoto 601-8501 (JP)
(72) Inventor: MASUJI, Shoya, Kyoto, 601-8501 (JP)
(74) Representative: Lorenz Seidler Gossel Part. mbB

(57) **Abstract**

A player object (100) is controlled based on mouse operation acquired from a mouse (16d, 15d), and a non-player object (200) is controlled based on an amount of movement, in an input state, of a virtual mouse (51, 61) that moves continuously moves in the input state or a non-input state within a virtual range (50, 60).

## Description

### CROSS REFERENCE TO RELATED APPLICATION

This application claims priority to Japanese Patent Application No. 2025-51254 filed on March 26, 2025, the entire contents of which are incorporated herein by reference.

### FIELD

The present disclosure relates to information processing.

### BACKGROUND AND SUMMARY

Conventionally, there is a game in which a non-player object appears.

It is conceivable to operate a non-player object so as to have a behavior that simulates an operation by a human. For example, when a player object is operated by a stick input by a user or a touch input on a touch pad, a range in which the player object is movable by the stick input or a range in which the touch input is possible receives physical constraints of a device. Therefore, it is conceivable that the non-player object is operated based on a virtual input within a range of such constraints. On the other hand, there is room for improvement in appropriate operation of a non-player object in a game using a mouse input by a user.

For example, the following configuration examples may be given.

### (Configuration Example 1)

Configuration 1 is directed to an information processing method implemented by a computer including one or more processors, the information processing method including: controlling a player object based on first mouse operation data acquired from a first mouse; continuously moving a first virtual mouse within a first virtual range in an input state or a non-input state; and controlling a non-player object based on an amount of movement of the first virtual mouse in the input state.

### (Configuration Example 2)

In a configuration example 2 based on the above configuration example 1, the information processing method further includes, when there is no need to control the non-player object based on the amount of movement of the first virtual mouse, moving the first virtual mouse in the non-input state to a specified position that is not an end of the first virtual range.

### (Configuration Example 3)

In a configuration example 3 based on the above configuration example 2, the specified position is a central position of the first virtual range.

### (Configuration Example 4)

In a configuration example 4 based on the above configuration example 2 or 3, the information processing method further includes, if control of the non-player object based on the amount of movement of the first virtual mouse becomes necessary while the first virtual mouse is moving to the specified position in the non-input state, moving the first virtual mouse in the input state from a position of the first virtual mouse at a time point when the control of the non-player object becomes necessary.

### (Configuration Example 5)

In a configuration example 5 based on any one of the above configuration examples 1 to 4, the information processing method further includes: controlling the player object based on second mouse operation data acquired from a second mouse; continuously moving a second virtual mouse in an input state or a non-input state within a second virtual range; and controlling the non-player object based on an amount of movement of the second virtual mouse in the input state.

### (Configuration Example 6)

In a configuration example 6 based on the above configuration example 5, the information processing method further includes: moving the player object based on the first mouse operation data and the second mouse operation data; and moving the non-player object based on the amount of movement of the first virtual mouse in the input state and the amount of movement of the second virtual mouse in the input state.

Each configuration example described above may be read as an information processing system or an information processing program.

### BRIEF DESCRIPTION OF THE DRAWINGS

FIG. 1 is a block diagram showing a non-limiting example of the internal configuration of a game apparatus 10;
FIG. 2 is a schematic diagram showing a non-limiting example of the appearance of a right controller 15 and a left controller 16;
FIG. 3 illustrates a non-limiting example of a way of holding the right controller 15 and the left controller 16 and a mouse operation;
FIG. 4 illustrates a non-limiting example of operation of a player character using the controllers;
FIG. 5 illustrates a non-limiting example of operation of a player character using the controllers;
FIG. 6 illustrates a non-limiting example of operation of the player character using the controllers;
FIG. 7 illustrates a non-limiting example of operation of a non-player character using a virtual mouse;
FIG. 8 illustrates a non-limiting example of operation of the non-player character using a virtual mouse;
FIG. 9 shows a non-limiting example of various data stored in a storage unit (memory) 12;
FIG. 10 shows a non-limiting example of a flowchart of information processing;
FIG. 11 shows a non-limiting example of a flowchart of the information processing;
FIG. 12 shows a non-limiting example of a flowchart of the information processing.

### DETAILED DESCRIPTION OF NON-LIMITING EXAMPLE EMBODIMENTS

Hereinafter, an exemplary embodiment will be described.

### [Hardware Configuration of Information Processing Apparatus]

An information processing system for executing information processing according to the exemplary embodiment will be described. This information processing system is an information processing apparatus such as a game apparatus, a personal computer, a tablet terminal, a smartphone, a wearable terminal, or a server, for example. The information processing system according to the exemplary embodiment may be composed of a plurality of information processing apparatuses, or may be composed of a game apparatus or the like as described above, and a server, for example. In the exemplary embodiment, a game apparatus will be described as an example of the information processing system and the information processing apparatus.

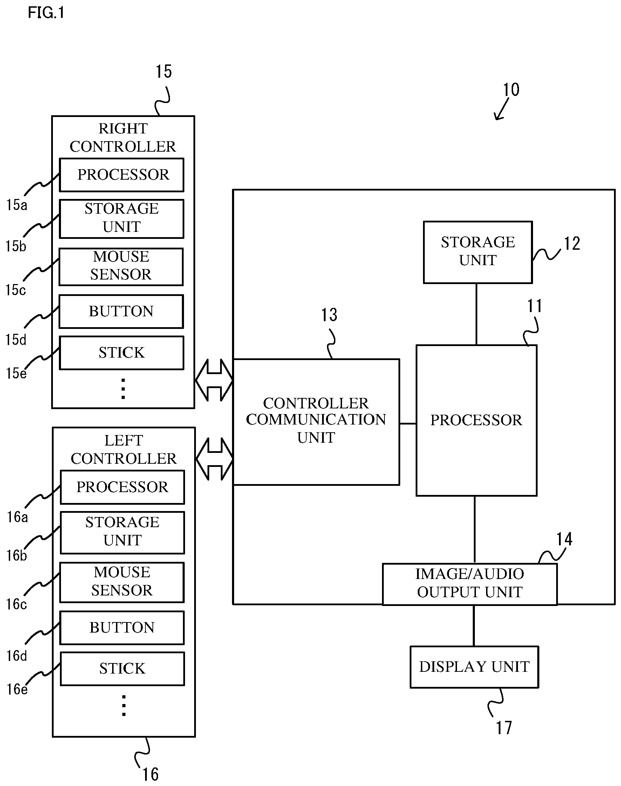

FIG. 1 is a block diagram showing an example of the internal configuration of a game apparatus 10 according to the exemplary embodiment. The game apparatus 10 includes a processor 11. The processor 11 is an information processing section for executing various kinds of information processing to be executed on the game apparatus 10. The processor 11 may be composed of a plurality of processors and cores, typically, a plurality of CPUs (Central Processing Units) and cores, or may be composed of a SoC (System-on-a-chip) including a plurality of functions such as a CPU function and a GPU (Graphics Processing Unit) function, for example. The processor 11 executes various information processes by executing an information processing program (e.g., a game program) stored in the storage unit 12. The storage unit 12 may be an internal storage medium such as a flash memory or a DRAM (Dynamic Random Access Memory), or may be an external storage medium attached to a slot (not shown), or the like. In the exemplary embodiment, the term "processor" may include at least a CPU, a GPU, an ASIC (Application Specific Integrated Circuit), an FPGA (Field Programmable Gate Array), and the like. In the exemplary embodiment, the computer includes at least one processor, as an example, and may further include a storage unit such as a memory. In a case where the information processing system includes a plurality of information processing apparatuses, each information processing apparatus may include at least one processor and may include a storage unit.

The game apparatus 10 includes a controller communication unit 13 for performing wireless communication and/or wired communication with a right controller 15 and a left controller 16. The controller communication unit 13 may be included in the processor 11.

A display unit 17 (for example, a display) is connected to the game apparatus 10 via an image/audio output unit 14 in a wired or wireless manner. The processor 11 outputs, for example, an image or audio generated by execution of the information processing described above via the image/audio output unit 14 to the display unit 17 also capable of audio output.

The right controller 15 includes a mouse sensor 15c. The mouse sensor 15c acquires data that enables calculation of movement and the like of the right controller 15 through a mouse operation. This data is repeatedly transmitted to the controller communication unit 13 at appropriate timing.

The right controller 15 includes a button 15d and an analog stick 15e. The analog stick (sometimes simply referred to as "stick") 15e can be used as a direction operation unit via which an operation for inputting a direction can be performed. By tilting the stick 15e in any direction, a user can input a direction corresponding to the tilting direction, and can input a magnitude corresponding to the tilting angle. Data indicating operation states of the button 15d and the stick 15e are repeatedly transmitted to the controller communication unit 13 at appropriate timings. The direction operation unit may be a slide-type stick, a direction key, or a set of four buttons.

The right controller 15 includes a processor 15a and a storage unit 15b. The processor 15a can acquire, for example, output data from the mouse sensor 15c, the button 15d, and the stick 15e, and can perform various processes using the acquired data. For example, the processor 15a can determine various operations performed on the right controller 15 using the acquired data.

The left controller 16 includes a storage unit 16b, a mouse sensor 16c, a button 16d, and a stick 16e that have functions similar to those of the processor 15a, the storage unit 15b, the mouse sensor 15c, the button 15d, and the stick 15e included in the right controller 15.

The right controller 15, the left controller 16, and the display unit 17 may be considered to be included in the game apparatus 10 or may be considered not to be included in the game apparatus 10.

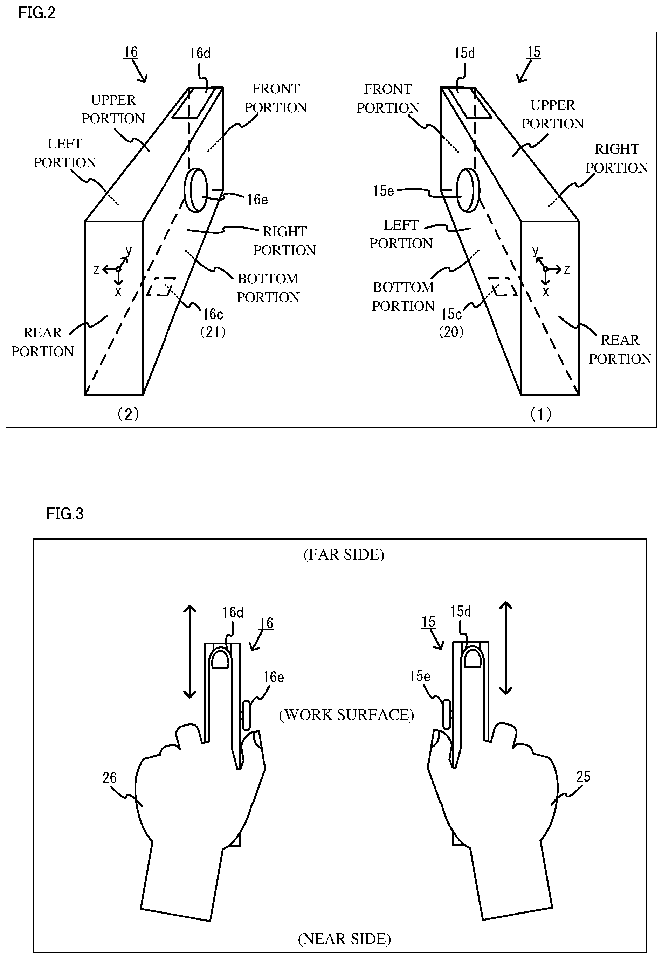

FIG. 2(1) is a schematic diagram showing an example of the appearance of the right controller 15. As shown in FIG. 2(1), the right controller 15 has, as an example, a platelike shape having a longitudinal direction along the y-axis (a rectangular parallelepiped or a similar shape in which a thickness in the x-axis direction is smaller than a thickness in the y-axis direction and a thickness in the z-axis direction, and the thickness in the z-axis direction is smaller than the thickness in the y-axis direction) (see the mutually orthogonal xyz coordinate system shown in FIG. 2(1)). The right controller 15 may have another shape. The y-axis may be referred to as longitudinal axis, and the x-axis and the z-axis may be referred to as short axes.

As shown in FIG. 2(1), the right controller 15 has, at a bottom portion thereof, an opening 20 for a mouse sensor. The opening 20 for a mouse sensor is an opening of a light guide path through which light is guided to the mouse sensor 15c disposed inside the opening 20. The mouse sensor 15c is, for example, an optical mouse sensor and may include a light emitting portion and a light receiving portion, for example. Light to be detected by the light receiving portion may be visible light or light having an invisible wavelength. The mouse sensor 15c acquires data that enables calculation of movement and the like of the right controller 15 on a work surface when the right controller 15 is placed with the bottom portion facing the work surface. By this, the right controller 15 can be used also as a mouse. An operation for use as a mouse may be referred to as "mouse operation". The mouse sensor may be, for example, a sensor of a type that detects movement of a trackball. The work surface is not limited to a flat surface, and may be a curved surface or the like, e.g., the surface of a thigh of the user.

Also, as shown in FIG. 2(1), the right controller 15 includes a button 15d, for example, at an end portion on a front side in an upper portion opposite to the bottom portion. The stick 15e is provided, for example, at a position that allows the user to easily operate the stick 15e with a thumb when the user holds the right controller 15 and performs a mouse operation (see FIG. 3).

As shown in FIG. 2(2), the left controller 16 differs from the right controller 15 in that, for example, a stick (16e) is provided at a right portion thereof. Also, as shown in FIG. 2(2), a mutually orthogonal xyz coordinate system defined for the left controller 16 has a z-axis direction in an opposite direction to a mutually orthogonal xyz coordinate system defined for the right controller 15 (see FIG. 2(1)). The right controller 15 may be referred to as a right mouse 15, and the left controller 16 may be referred to as a left mouse 16.

### [Example of Holding Manner of Controller]

FIG. 3 illustrates a method of mouse operation by the left controller 16 and the right controller 15. As shown in FIG. 3, the user holds the left controller 16 with, for example, a left hand 26, and holds the right controller 15 with a right hand 25. Then, as shown in FIG. 3, the user can perform a mouse operation of moving the left controller 16 on a work surface, for example, in the front-rear direction (the y-axis direction in FIG. 2(2)), can press the button 16d with an index finger or a middle finger, and can operate the stick 16e with a thumb. Also, the user can perform a mouse operation of moving the right controller 15 on a work surface, for example, in the front-rear direction (the y-axis direction in FIG. 2(1)), can press the button 15d with an index finger or a middle finger, and can operate the stick 15e with a thumb. The left controller 16 and the right controller 15 can perform a mouse operation also in a direction other than the front-rear direction on the work surface.

The work surface for the left controller 16 and the work surface for the right controller 15 may be different work surfaces instead of one work surface (that is, a common work surface). For example, the user can use the upper surface (front side surface) of the thigh of a left leg as a work surface for the left controller 16, and use the upper surface (front side surface) of the thigh of a right leg as a work surface for the right controller 15.

### [Game Assumed in Exemplary Embodiment]

An outline of game processing performed by the game apparatus 10 according to the exemplary embodiment will be described. The game assumed in the exemplary embodiment is, as an example, a game in which a wheelchair placed in a field within a virtual space is moved. Specifically, the game is a game in which a player character (a character object in which a person is on a wheelchair; sometimes referred to as "PC") that moves, etc., according to operations performed by the user, to collect items, for example. Also, in this game, a non-player character object (sometimes referred to as "NPC") is placed in the field and is automatically controlled by a computer.

The game executed by the game apparatus 10 is not limited to the game described above. The game may be, for example, a shooting game, a sports game, or an action game. The game may be one in which a user performs a mouse operation on one controller. The game may be one in which a plurality of users respectively operate objects. In the game, a plurality of NPCs may be controlled. For example, in a game in which one or a plurality of objects participate, one or a plurality of objects that are not operated by one or a plurality of users may be controlled as NPCs. Hereinafter, for convenience of description, description will be given assuming that one NPC is placed in a field in a single-player game played by one user.

### [Outline of Game Processing of Exemplary Embodiment]

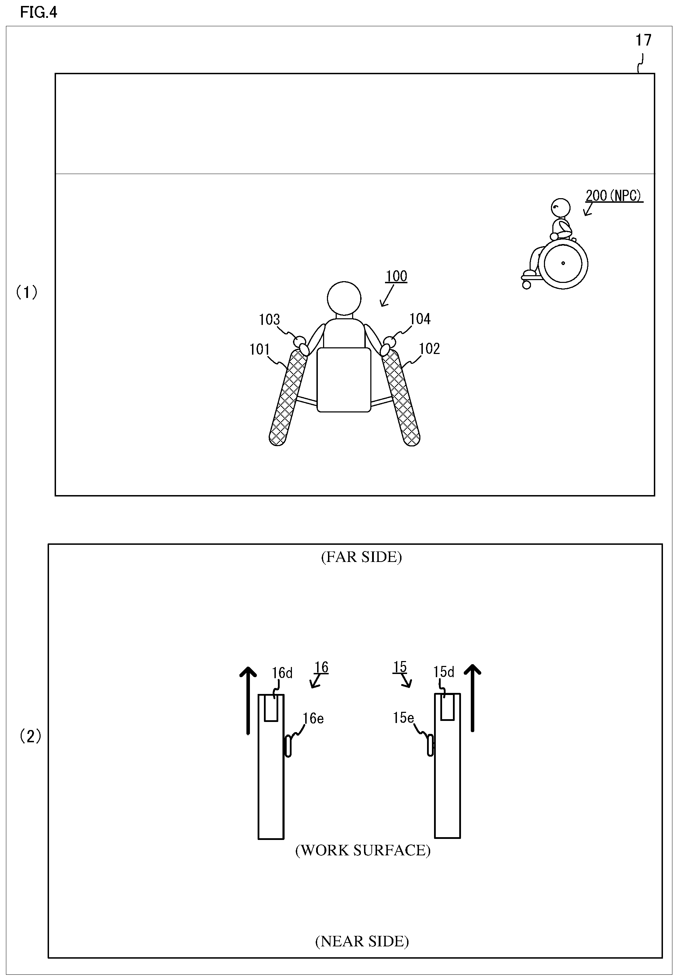

An outline of operation of the game processing executed by the game apparatus 10 according to the exemplary embodiment will be described. FIG. FIG. 4 to FIG. 6 illustrate examples of a method for operating a PC by the user. FIG. 4(1) is an example of a game image in which a virtual space of this game is rendered. In FIG. 4(1), a PC 100 operated by the user of the game apparatus 10 and an NPC 200 automatically operated by the computer are displayed.

In the exemplary embodiment, the PC 100 can be moved, etc. by a mouse operation of moving the left controller 16 in the y-axis direction (see FIG. 2(2)) and a mouse operation of moving the right controller 15 in the y-axis direction (see FIG. 2(1)). Specific description will be given below.

As shown in FIG. 4(2), when a mouse operation in which the left controller 16 moves in a far-side direction (more accurately, the y-axis plus direction in FIG. 2(2)) on a work surface is performed, a left wheel 101 rotates in a direction in which the PC 100 moves forward by an amount corresponding to the distance of the movement. Simultaneously, when a mouse operation in which the right controller 15 moves in the far-side direction (more accurately, the y-axis plus direction of FIG. 2(1)) on a work surface is performed, a right wheel 102 rotates in the direction in which the PC 100 moves forward by an amount corresponding to the distance of the movement. By this, the PC 100 moves forward based on the amounts of movement of the left controller 16 and the right controller 15. In the case of FIG. 4, the movement distance of the mouse operation of the left controller 16 and the movement distance of the mouse operation of the right controller 15 are the same, and thus the PC 100 moves straight forward.

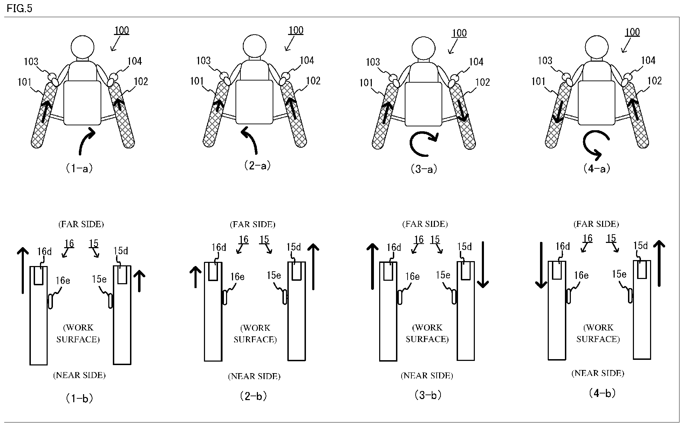

When, as shown in FIG. 5(1-b), a mouse operation in which the left controller 16 moves in the far-side direction is performed and a mouse operation in which the right controller 15 moves in the far-side direction by a distance shorter than the movement distance of the left controller 16 is performed, the PC 100 moves forward while turning in the right direction as shown in FIG. 5(1-a). When, as shown in FIG. 5(2-b), a mouse operation in which the right controller 15 moves in the far-side direction is performed and a mouse operation in which the left controller 16 moves in the far-side direction by a distance shorter than the movement distance of the right controller 15 is performed, the PC 100 moves forward while turning in the left direction as shown in FIG. 5(2-a).

When, as shown in FIG. 5(3-b), a mouse operation in which the left controller 16 moves in the far-side direction is performed and a mouse operation in which the right controller 15 moves in a near-side direction by the same distance as the movement distance of the left controller 16 is performed, the PC 100 rotates to the right on the spot as shown in FIG. 5(3-a). When, as shown in FIG. 5(4-b), a mouse operation in which the left controller 16 moves in the near-side direction is performed and a mouse operation in which the right controller 15 moves in the far-side direction by the same distance as the movement distance of the left controller 16 is performed, the PC 100 rotates to the left on the spot as shown in FIG. 5(4-a).

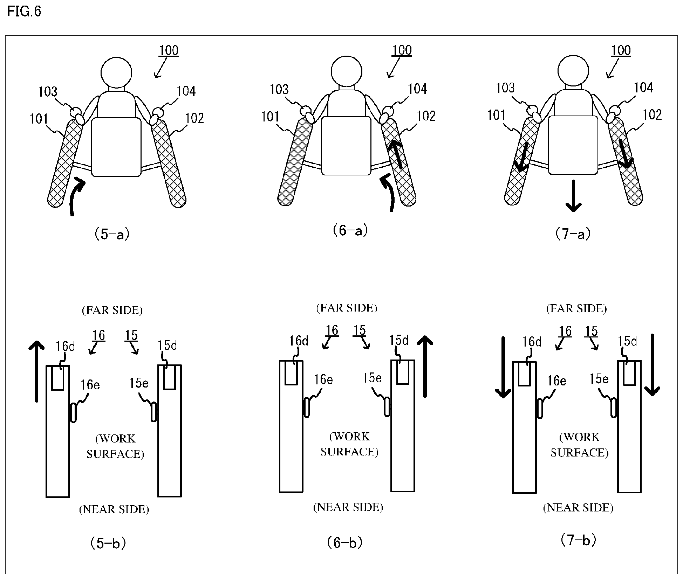

When, as shown in FIG. 6(5-b), a mouse operation in which the left controller 16 moves in the far-side direction is performed, but the right controller 15 moves neither in the far-side direction nor in the near-side direction, the PC 100 rotates to the right about the grounding point of the wheel 102 as shown in FIG. 6(5-a). When, as shown in FIG. 6(6-b), a mouse operation in which the right controller 15 moves in the far-side direction is performed, but the left controller 16 moves neither in the far-side direction nor in the near-side direction, the PC 100 rotates to the left about the grounding point of the wheel 101 as shown in FIG. 6(6-a).

When, as shown in FIG. 6(7-b), a mouse operation in which the left controller 16 and the right controller 15 move in the near-side direction by the same distance is performed, the PC 100 moves straight backward as shown in FIG. 6(7-a). A mouse operation in which the PC 100 turns while moving backward, etc., can be understood from FIG. 5(1-b)(2-b), etc., and thus the description thereof is omitted. Also, the mouse operations described above are merely examples.

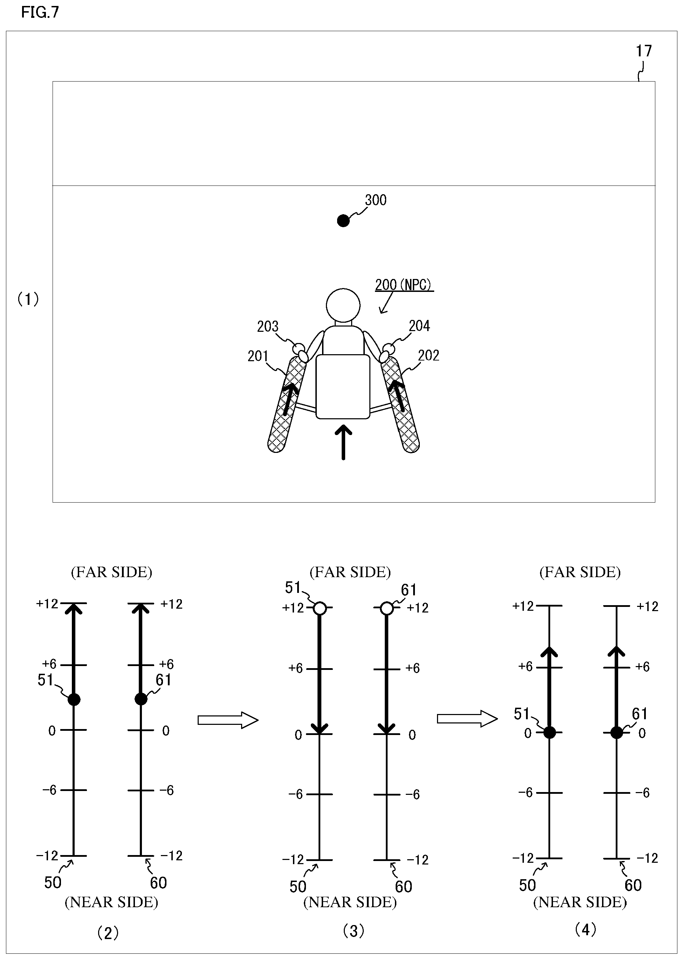

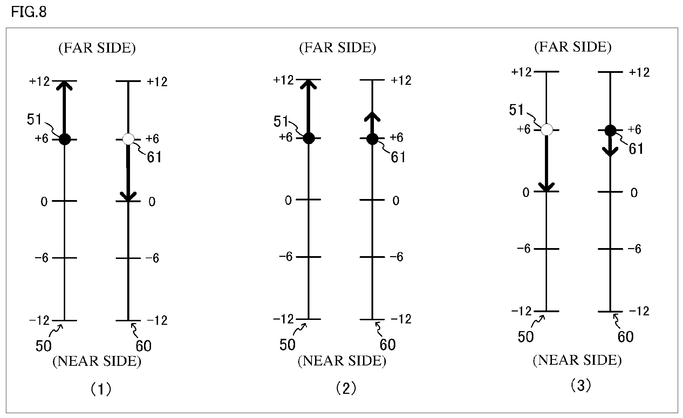

FIG. 7 and FIG. 8 illustrate a method of automatic control of the NPC 200 by the computer. FIG. 7(1) is an example of a game image in which the virtual space of this game is rendered, and the NPC 200 automatically operated by the computer is displayed. In FIG. 7, for convenience of description, an image in which the NPC 200 is viewed from behind is displayed. In an actual game, the image in which the NPC 200 is viewed from behind may not necessarily be displayed, or may be displayed.

In the exemplary embodiment, in order to control an NPC in the same manner as or in a manner similarly to the mouse operation by the user described above, concepts of a virtual left mouse 51 and a virtual right mouse 61 are introduced. The virtual left mouse 51 and the virtual right mouse 61 are expressed by movement of points as an example. The points continuously move similarly to movement of coordinates indicated by the left controller 16 and the right controller 15 (in other words, do not move to other positions instantaneously). The points do not need to be rendered by the game apparatus. Also, movement of the points does not need to be actually calculated. For example, a parameter corresponding to a position of a point may be calculated at a necessary timing. Hereinafter, a point moved in this way may be referred to as "virtual mouse".

As shown in FIG. 7(2), the virtual left mouse 51 is movable within a virtual movement range (sometimes referred to as "virtual range") 50 for the virtual left mouse 51, and the virtual right mouse 61 is movable within a virtual range 60 for the virtual right mouse 61. The virtual range 50 and the virtual range 60 are straight lines, and as an example, a center is a position of 0 (zero) cm, an end in a far-side direction is a position of +12 cm, and an end in a near-side direction is a position of -12 cm. This far-side direction and near-side direction correspond to the far-side direction and the near-side direction (see FIG. 4), respectively, in a case where the user performs a mouse operation on a controller. For example, a behavior similar to the behavior of the PC 100 when the user moves the controller forward by 12 cm occurs in the NPC 200 when the virtual mouse moves forward by 12 cm.

For the virtual left mouse 51 and the virtual right mouse 61, one of an "input state" and a "non-input state" is set as a state related to an input. The input state is a state in which a wheel of the NPC 200 rotates according to movement of the virtual mouse and the NPC 200 moves, etc., and corresponds to, for example, a state in which the user is performing a mouse operation on the controller on a work surface. The non-input state is a state in which movement of the virtual mouse does not affect rotation of the wheel of the NPC 200 and does not affect movement, etc., of the NPC 200, and corresponds to, for example, a state in which the user is lifting the controller from the work surface, and corresponds to, for example, a state in which the user is lifting from the work surface and moving the controller in order to return the controller to the original position on the work surface and perform a mouse operation again. In the exemplary embodiment, a virtual mouse in the input state is shown by a black circle, and a virtual mouse in the non-input state is shown by a white circle (see FIG. 7).

As shown in FIG. 7(1), a target position 300 that is a movement destination of the NPC 200 is set. The target position 300 may be, for example, the position of the PC 100, or may be the position of an item to be acquired in the game. The target position 300 may be set so as to gradually approach toward a final target position. The target position 300 is set according to a game situation. As an example, a target may be set according to the state of the virtual space, the positions and states of the NPC 200 and the PC 100, a score, etc., and the target position 300 may be set according to the target. The target position 300 is set to a next position at a time point when the NPC 200 reaches the target position 300, for example. Also, the target position 300 may be reset, for example, when an obstacle (for example, the PC 100) has moved between the NPC 200 and the target position 300 before the NPC 200 reaches the target position 300. The NPC 200 is controlled to move toward the target position 300. Specific description will be given below. Although the target position 300 is shown in FIG. 7(1) for convenience of description, the target position 300 may not necessarily be displayed.

When, as shown in FIG. 7(2), a virtual mouse operation in which the virtual left mouse 51 moves in the far-side direction on the virtual range 50 is performed, a left wheel 201 rotates in a direction in which the NPC 200 moves forward by an amount corresponding to the distance of the movement. Simultaneously, when a virtual mouse operation in which the virtual right mouse 61 moves in the far-side direction on the virtual range 60 is performed, a right wheel 202 rotates in a direction in which the NPC 200 moves forward by an amount corresponding to the distance of the movement. By this, the NPC 200 moves forward based on the amounts of movement of the virtual left mouse 51 and the virtual right mouse 61. In the case of FIG. 7(2), the movement distance of the virtual mouse operation of the virtual left mouse 51 and the movement distance of the virtual mouse operation of the virtual right mouse 61 are the same, and thus the NPC 200 moves straight forward. In the exemplary embodiment, the movement speed of the virtual mouse is variable, but may be constant. The movement speed may be variable when the virtual mouse is in the input state, and the movement speed may be constant when the virtual mouse is in the non-input state. An upper limit may be set for the movement speed of the virtual mouse.

When the virtual mouse reaches an end of the virtual range in the input state, the virtual mouse cannot move beyond the end. When it is necessary to move the NPC 200 further forward, the virtual mouse is moved in the opposite direction once in the non-input state, and then moved in the same direction again in the input state. This is because if the virtual mouse is moved in the opposite direction in the input state, the forward speed of the NPC 200 decreases or moves backward. As an example, as shown in FIG. 7(3), the virtual left mouse 51 and the virtual right mouse 61 are once set to the non-input state and moved in the near-side direction. After that, as shown in FIG. 7(4), the virtual left mouse 51 and the virtual right mouse 61 are set to the input state again and moved in the far-side direction. By repeating this control, the NPC 200 can be moved forward with a behavior similar to that when the user operates the PC 100 by performing a mouse operation using the left controller 16 and the right controller 15.

Although FIG. 7 shows an example in a case where the NPC 200 moves forward, the NPC 200 can perform various actions similarly to the PC 100, for example. For example, the NPC 200 can perform actions similar to those of the PC 100 in FIG. 5 and FIG. 6. Such an action of the NPC 200 is realized by the virtual left mouse 51 and the virtual right mouse 61 performing movement similar to the left controller 16 and the right controller 15 shown in FIG. 5 and FIG. 6, for example. That is, by the virtual left mouse 51 and the virtual right mouse 61 performing movement simulating the actual left controller 16 and right controller 15, the NPC 200 is controlled with a behavior similar to the PC 100 controlled based on movement of the actual left controller 16 and right controller 15.

When the user performs a mouse operation on a controller, although a movable range of the controller is theoretically unlimited, it actually receives physical constraints such as, for example, a range of a desk surface or a range in which an arm can be extended. Then, for example, when the controller reaches an end of the range, the user moves the controller toward the center side of the range with or without lifting the mouse, and then starts a mouse operation again. According to the embodiment described above, since the NPC 200 is controlled based on a virtual mouse operation by each virtual mouse moving within the virtual range in the input state or the non-input state, a behavior of the NPC 200 becomes a natural one like a behavior of the PC 100, and thus the user experience can be improved. Also, in order to cause a behavior of the NPC 200 as if based on an actual user operation, there is a possibility that a huge amount of calculation is required, but according to the exemplary embodiment, choices such as a direction and a state (input state or non-input state) in which the virtual mouse can move at each time are finite, and thus a calculation amount can be reduced.

Here, as shown in FIG. 7(3), when the left and right virtual mice 51, 61 are moving to the center in the non-input state, the target position 300 may be changed. For example, consider a case where it becomes necessary for the NPC 200 to move toward the right front. At this time, the left and right virtual mice 51, 61 can become the input state again and move before returning to the center. In this way, similarly to a mouse operation by an actual user, the virtual mouse may be changeable in a movement mode even during movement.

As described above, when the NPC 200 is moved toward the right front, various modes are conceivable for the input state and the direction of movement of the left and right virtual mice 51, 61. For example, as shown in FIG. 8(1), the virtual left mouse 51 may move in the far-side direction in the input state, and the virtual right mouse 61 may continue to move toward the center in the non-input state. Also, as shown in FIG. 8(2), the virtual left mouse 51 may move in the far-side direction in the input state, and the virtual right mouse 61 may move in the far-side direction in the input state at a lower speed than the virtual left mouse 51. Also, as shown in FIG. 8(3), the virtual left mouse 51 may continue to move toward the center in the non-input state, and the virtual right mouse 61 may move in the near-side direction in the input state. When the NPC 200 has been moved forward by inertia, the NPC 200 can turn to the right while moving forward.

Also for each operation as shown as an example in FIG. 5 and FIG. 6, the input state and movement of the virtual left mouse 51 and the virtual right mouse 61 for realizing it are not limited to one.

As described above, for example, in a case where there are a plurality of movement modes of a virtual mouse for reaching a certain target position 300 or a periphery thereof, any movement mode may be selected based on a specified process. For example, a movement mode of the NPC 200 that can reach the target position 300 fastest may be selected. For example, a difficulty level is set for the game, and as the difficulty level is higher, a movement mode of the NPC 200 that reaches the target position 300 faster may be selected.

In the exemplary embodiment, for example, at a time point when the virtual mouse is located at a position other than the central position (that is, a position of 0) of the virtual range in the input state, in a case where a state where control of movement or direction change, etc., of the NPC 200 is unnecessary has occurred (for example, in a case where the NPC 200 has arrived at the target position 300, etc.), the virtual mouse is returned to the central position in the non-input state. This is a behavior similar to an operation in which the user moves the controller to a position where it is easy to operate the controller in any direction in preparation for a next mouse operation when there is no need to perform a mouse operation. By the virtual mouse being returned to the central position, when it becomes necessary for the NPC 200 to move, etc., thereafter, it becomes easy for the NPC 200 to move in any direction. As a result, user experience can be improved. A position to which the virtual mouse is returned is not limited to the central position described above, and may be a position that is not an end of the virtual range.

As in the example shown in FIG. 7, in a case where it is necessary for the virtual mouse to move in the same direction a plurality of times in the input state, a movement destination to which the virtual mouse is returned in the non-input state in the intervals between those movements is not limited to the central position. For example, as shown in FIG. 7(2), from a state where the virtual mouse has been moved to +12 cm, when it is necessary for the NPC 200 to move or accelerate in the far-side direction only a little more, the virtual mouse may be returned to, for example, +10 cm in the non-input state, and from there, may be moved again in the input state in the far-side direction by 2 cm to +12 cm. Alternatively, the virtual mouse may be returned from the position of +12 cm to a position of -12 cm in the non-input state.

Also, for example, in a case where the virtual mouse is returned to the central position of the virtual range in the non-input state, a position of the virtual mouse may be calculated every frame. Alternatively, during a period in which it is treated that the virtual mouse is moving toward the central position in the non-input state, the position of the virtual mouse may not necessarily be calculated, and at a timing when it becomes necessary to move the virtual mouse as a movement state, a current position of the virtual mouse may be calculated. For example, a time from a time point when the virtual mouse has become the non-input state and started movement toward the central position to the present time may be multiplied by the movement speed of the virtual mouse, and the current position of the virtual mouse may be calculated from a calculated distance and a position where the virtual mouse started movement toward the central position. Also, a specified waiting time or a calculated waiting time may be set until the virtual mouse is returned to the central position of the virtual range in the non-input state. The virtual mouse may not necessarily be able to move in the input state during the waiting time. The virtual mouse is positioned at, for example, the central position of the virtual range after passage of the waiting time. Even when the position of the virtual mouse is calculated at all times, for example every frame, or calculated at a certain timing as described above, it can be said that the virtual mouse is being moved substantially continuously.

### [Information processing of exemplary embodiment]

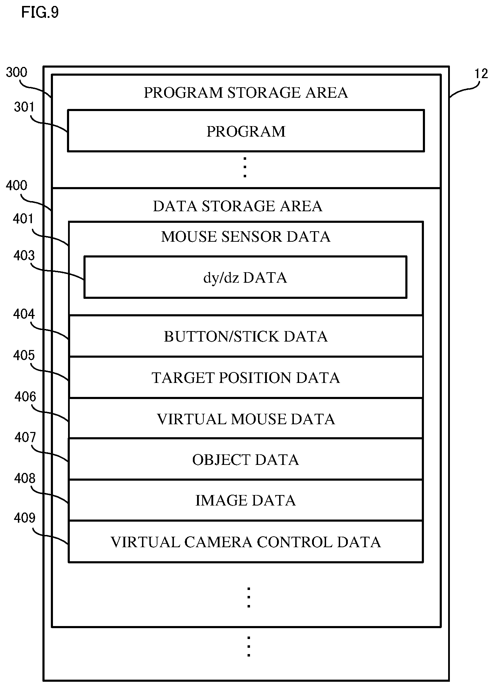

With reference to FIG. 9 to FIG. 12, the information processing of the exemplary embodiment will be described.

### [Data to be used]

Various data stored in the storage unit 12 will be described. FIG. 9 shows an example of data stored in the storage unit 12 of the game apparatus 10. As shown in FIG. 9, the storage unit 12 is provided with at least a program storage area 300 and a data storage area 400.

At least a program 301 is stored in the program storage area 300. In the data storage area 400, at least mouse sensor data 401, button/stick data 404, target position data 405, virtual mouse data 406, object data 407, image data 408, and virtual camera control data 409 are stored.

The program 301 is a game program for performing game processing.

The mouse sensor data 401 is data about outputs of the mouse sensor 15c and the mouse sensor 16c, and includes dy/dz data 403.

The dy/dz data 403 is output data of the mouse sensor 15c and the mouse sensor 16c, and is data indicating a movement distance per frame time (which may be referred to as "dy/dz") in the y-axis direction and the z-axis direction (i.e., yz plane; see FIG. 2(1) and (2)) in the controller coordinate system relative to the work surface or the like. The movement distance dy/dz may be calculated based on output data from the mouse sensor, by the processor included in the controller, or by the processor 11 or the like.

The button/stick data 404 is data indicating operation states of the button and the stick of the controller.

The target position data 405 is data indicating a position within the virtual space of the target position 300 described with reference to FIG. 7.

The virtual mouse data 406 is data about the virtual left mouse 51 and the virtual right mouse 61 described with reference to FIG. 7, etc., and is data indicating whether it is in the input state or the non-input state, where it is positioned on the virtual range, whether it is moving or not, in which direction it is moving, etc., for each of the virtual left mouse 51 and the virtual right mouse 61.

The object data 407 is data of virtual objects to be placed in the virtual space, and is, for example, data of virtual objects such as the PC 100, the NPC 200, ground, buildings, and items. The object data 407 includes information about the positions, the orientations, etc., of the virtual objects.

The image data 408 is image data of animation images, backgrounds, virtual effects, etc.

The virtual camera control data 409 is data for controlling a virtual camera that is placed in the virtual space and takes an image of the virtual space.

In addition, various data to be used in rendering processing, etc., are stored in the storage unit 12, as necessary. As an example, the target position data 405, the virtual mouse data 406, the object data 407, the image data 408, and the virtual camera control data 409 may be considered as a part of the program.

### [Detailed Information Processing Example]

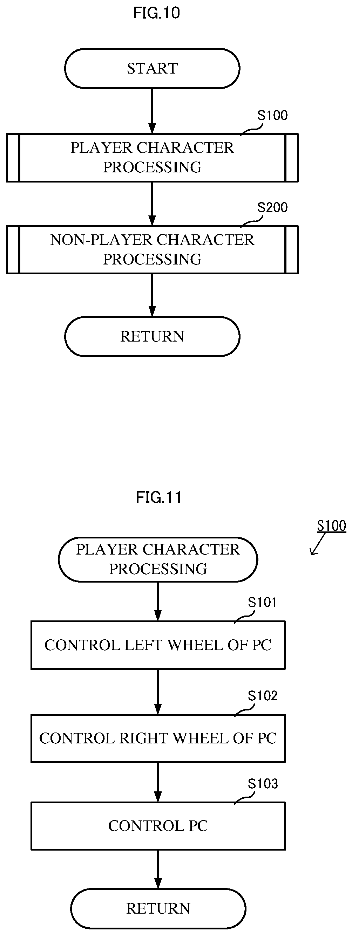

An example of game processing according to the exemplary embodiment will be described with reference to flowcharts. FIG. 10 to FIG. 12 are an example of flowcharts showing the details of the game processing according to the exemplary embodiment. Hereinafter, processing characteristic to the exemplary embodiment will be mainly described, and the description of other processing such as rendering processing is basically omitted. An execution order of each process is an example, and for example, a plurality of processes may be executed in parallel, or some processes may be executed in an order opposite to the description. For convenience of description, the processing is divided into each unit, but these division units are arbitrary, a plurality of processes may be integrated, or one process may be divided into a plurality of processes. The processing may include other processing, or a part of the processing may be omitted. Also, the processing of FIG. 10 to FIG. 12 is executed at specified intervals (e.g., frame intervals in processing performed per 1/60 seconds).

When the game processing is started, in step S100, the processor 11 performs player character processing. Then, the processing proceeds to step S200.

In step S200, the processor 11 performs non-player character processing. Then, the processing returns to step S100.

FIG. 11 is an example of a flowchart of the player character processing in step S100. In step S101 in FIG. 11, the processor 11 rotates the left wheel 101 of the PC 100 based on the mouse sensor data 401. For example, the processor 11 calculates a direction and a distance of a mouse operation in the y-axis direction of the left controller 16 (see FIG. 2(2)) based on the dy/dz data 403 outputted from the mouse sensor 16c, and rotates the left wheel 101 according to the direction and the distance. Then, the processing proceeds to step S102. In step S102, the right wheel 102 is also similarly controlled. After step S102, the processing proceeds to step S103.

In step S103, the processor 11 controls movement of the PC 100 based on rotation of the left wheel 101 performed in step S101 and rotation of the right wheel 102 performed in step S102. Also, in a case where rotation of a wheel is not performed in step S101 and/or step S102, the processor 11 may control movement of the PC 100 so as to move by inertia. The PC 100 does not need to be controlled by physical calculation based on rotation of a wheel, and may be controlled by performing appropriate calculation based on parameters related to rotation speeds of the left and right wheels. The PC 100 may be controlled based on an operation on the button or the stick of the controller. Then, the processing proceeds to step S200 in FIG. 10.

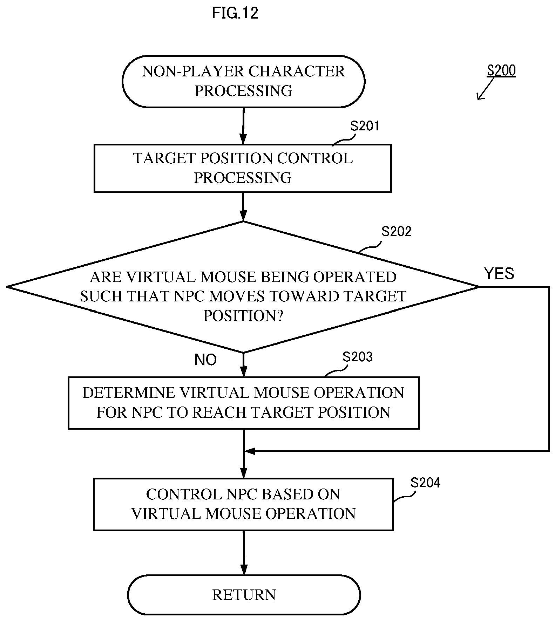

FIG. 12 is an example of a flowchart of the non-player character processing in step S200. In step S201 in FIG. 12, the processor 11 performs target position control processing. For example, the processor 11 performs determination or change of the target position 300 as stated in description of FIG. 7, and updates the target position data 405. Then, the processing proceeds to step S202.

In step S202, the processor 11 determines whether or not the virtual mice are being operated such that the NPC 200 moves toward the target position 300. For example, when the NPC 200 is in a stopped state or when the target position 300 has been changed from a previous position, it is determined as NO in step S202. If the determination result in step S202 is YES, the processing proceeds to step S204, and if the determination result in step S202 is NO, the processing proceeds to step S203.

In step S203, the processor 11 determines how to operate each virtual mouse in order for the NPC 200 to reach the target position 300. The operation of the virtual mouse may include a state (input state or non-input state), a movement direction, and an amount of movement. The determined operation of the virtual mouse is movement of the virtual mouse in a plurality of frames until the NPC 200 reaches the target position 300. The operation of the virtual mouse may be movement of the virtual mouse in a current processing frame. In this case, the operation of the virtual mouse is determined every frame. Then, the processing proceeds to step S204.

In step S204, the processor 11 controls the NPC 200 based on the operation of the virtual mouse determined in latest processing of step S203. The NPC 200 may be controlled with a behavior similar to movement according to inertia, a behavior of the PC 100 performed according to a mouse operation, a button operation, etc. on the controller. Then, the processing returns to step S100 in FIG. 10.

### [Modifications]

The virtual range in which a virtual mouse operation is performed may be a two-dimensional range. For example, in the embodiment described above, an object (player object, PO) operated by the user may be controlled by a mouse operation on the yz plane of the controller (see FIG. 2), and an object (non-player object, NPO) automatically controlled by the computer may be controlled by a virtual mouse operation corresponding to the mouse operation. The two-dimensional range may be limited to, for example, a square, rectangular, or circular range.

The PO and the NPO are not limited to objects in which a character is on a wheelchair. For example, the PO and the NPO may each be an object walking on ground, an object flying in air, an aim sight pointing at a firing direction of a bullet, a mouse cursor, or the like.

The PO and the NPO may be objects of different types from each other. The NPO may be a type of object that cannot be operated by the user.

A behavior of the PO corresponding to a mouse operation of the controller and a behavior of the NPO corresponding to movement of the virtual mouse are not limited. For example, the PO may face left or right according to a mouse operation to the left or right being performed on the controller, and the NPO may face left or right according to the virtual mouse moving left or right. By virtual mouse control as in the embodiment described above, the NPO is inhibited from performing actions that are not realistic as behaviors of the PO by a user operation, such as direction change at a large angle or continuous direction change in one direction in a short time.

As an example of the input state and the non-input state of the virtual mouse, an example corresponding to a state where a mouse operation is performed on the controller on a work surface and a state where the controller is lifted from the work surface has been described. However, states corresponding to the input state and the non-input state are not limited to these. For example, assume a game in which: if a mouse operation is performed on a controller while a specific button of the controller is kept pressed, a PO performs a specific action; and, when the specific button is not pressed, even if a mouse operation is performed on the controller, the PO does not perform an action corresponding to the operation. At this time, the input state and the non-input state of the virtual mouse may correspond to the button pressed state and the button non-pressed state described above, respectively. The input state of the virtual mouse may be a state where some influence occurs within the game according to a mouse operation, and the non-input state of the virtual mouse may be a state where no influence occurs within the game even if a mouse operation is performed.

The state related to an input of the virtual mouse described above may include four states, that is, a grounding state, a non-grounding state, a button pressed state, and a button non-pressed state. The non-grounding state may be an example of the non-input state, the button non-pressed state may be an example of the non-input state, or a non-grounding state and a button non-pressed state may be an example of the non-input state. Also, the state related to an input of the virtual mouse described above may include three states, that is, a grounding state (button being pressed), a grounding state (button not being pressed), and a non-grounding state. For example, when the virtual mouse is moved in the grounding state (button not being pressed), the NPO may perform an action different from that while a button is being pressed. At this time, the grounding state (button being pressed) and the grounding state (button not being pressed) are each an example of an input state, and the non-grounding state may be an example of a non-input state.

Further, in the embodiment described above, at least a part of the processing performed by the processor 11 may be performed by the processors (15a, 16a) of the controllers, or may be performed by another processor.

The game apparatus 10 is also an example of the information processing apparatus. The game apparatus 10 is an apparatus capable of executing a game. A personal computer or a tablet terminal capable of executing a game is also an example of a game apparatus. The information processing apparatus may be an apparatus that does not execute a game. Similarly, the information processing system may be a system that does not execute a game.

The shape of each controller is merely an example, and may be, for example, another shape. Further, the controller may not necessarily have some of the operation units, or may have other operation units.

The various data in the embodiment described above are examples, and in each processing, those converted into other data, etc., may be appropriately used.

In the present specification, even in a case where data is described using the same term, contents of the data do not need to coincide completely. At least, in a case where both certain data and other data convey specific information, these data may be considered to be the same data. Also, names given to data are for convenience, and do not limit a range or technical meaning indicated by the data.

In the present specification, a program that causes a computer to perform processing may be a single program, or may be a program group including a plurality of programs. In the present disclosure, "a program" does not need to mean a single program and can include a program group. Also, "a program" does not need to be stored entirely within a single apparatus. "A program" may mean, for example, the entirety of a plurality of programs respectively stored in a plurality of apparatuses included in a computer.

In the present specification, "computer" does not necessarily mean a single apparatus, and can include an entirety in which a plurality of apparatuses are connected in a wired or wireless manner.

The information processing system may include a terminal-side apparatus and a server-side apparatus which can communicate with each other via a network, and at least a part of the series of processes described above may be executed by the server-side apparatus. The server may be composed of a plurality of information processing apparatuses, and the processing may be executed in a shared manner by the plurality of information processing apparatuses.

While the exemplary embodiment and modifications have been described above, it is to be understood that the above description is, in all aspects, merely an illustrative example, and is not intended to limit the scope thereof. In addition, it is to be understood that various improvements and changes can be made to the exemplary embodiment and modifications.

## Claims

1. An information processing method implemented by a computer including one or more processors (11), the information processing method comprising:
controlling a player object (100) based on first mouse operation data acquired from a first mouse (16d);
continuously moving a first virtual mouse (51) within a first virtual range (50) in an input state or a non-input state; and
controlling a non-player object (200) based on an amount of movement of the first virtual mouse in the input state.

2. The information processing method according to claim 1, further comprising, when there is no need to control the non-player object based on the amount of movement of the first virtual mouse, moving the first virtual mouse in the non-input state to a specified position that is not an end of the first virtual range.

3. The information processing method according to claim 2, wherein the specified position is a central position of the first virtual range.

4. The information processing method according to claim 2 or 3, further comprising, if control of the non-player object based on the amount of movement of the first virtual mouse becomes necessary while the first virtual mouse is moving to the specified position in the non-input state, moving the first virtual mouse in the input state from a position of the first virtual mouse at a time point when the control of the non-player object becomes necessary.

5. The information processing method according to any one of claims 1 to 4, further comprising:
controlling the player object based on second mouse operation data acquired from a second mouse (15d);
continuously moving a second virtual mouse (61) in an input state or a non-input state within a second virtual range (60); and
controlling the non-player object based on an amount of movement of the second virtual mouse in the input state.

6. The information processing method according to claim 5, further comprising:
moving the player object based on the first mouse operation data and the second mouse operation data; and
moving the non-player object based on the amount of movement of the first virtual mouse in the input state and the amount of movement of the second virtual mouse in the input state.

7. An information processing system comprising means for executing the information processing method according to any one of claims 1 to 6.

8. An information processing program that, when executed by a computer, causes the computer to execute the information processing method according to any one of claims 1 to 6.
